# EUROPÄISCHE PATENTSCHRIFT

(11) **EP 0 876 686 B1**
(45) Veröffentlichungstag und Bekanntmachung des Hinweises auf die Patenterteilung: **15.03.2000**
(21) Anmeldenummer: 96946210.0
(22) Anmeldetag: 18.12.1996
(51) Int. Cl.: H01M 8/24, H01M 8/02

(54) **FLÜSSIGKEITSGEKÜHLTE BRENNSTOFFZELLE MIT VERTEILUNGSKANÄLEN**
FLUID-COOLED FUEL CELL WITH DISTRIBUTION DUCTS
CELLULE ELECTROCHIMIQUE REFROIDIE PAR LIQUIDE ET MUNIE DE CANAUX DE DISTRIBUTION

(30) Priorität: 23.01.1996 DE 19602315
(43) Veröffentlichungstag der Anmeldung: 11.11.1998
(73) Patentinhaber: SIEMENS AKTIENGESELLSCHAFT, 80333 München (DE)
(72) Erfinder: NÖLSCHER, Christoph, D-90419 Nürnberg (DE); MATTEJAT, Arno, D-91088 Bubenreuth (DE)
(86) Internationale Anmeldenummer: DE9602451
(87) Internationale Veröffentlichungsnummer: WO9727638

(56) Entgegenhaltungen:
- WO-A-96/37005
- DE-A- 3 321 984
- DE-A- 3 323 491
- DE-A- 3 907 819
- GB-A- 2 158 989
- US-A- 3 575 719
- PATENT ABSTRACTS OF JAPAN vol. 095, no. 003, 28.April 1995 & JP 06 338332 A (MITSUBISHI HEAVY IND LTD), 6.Dezember 1994,
- PATENT ABSTRACTS OF JAPAN vol. 095, no. 003, 28.April 1995 & JP 06 333580 A (MITSUBISHI HEAVY IND LTD), 2.Dezember 1994,
- PATENT ABSTRACTS OF JAPAN vol. 096, no. 002, 29.Februar 1996 & JP 07 272730 A (MAZDA MOTOR CORP), 20.Oktober 1995,
- PATENT ABSTRACTS OF JAPAN vol. 017, no. 289 (E-1375), 3.Juni 1993 & JP 05 021076 A (SANYO ELECTRIC CO LTD), 29.Januar 1993,

## Beschreibung

Die Erfindung betrifft eine flüssigkeitsgekühlte Brennstoffzelle, bei der die Versorgung der Zellflächen mit Reaktionsmedien über axiale Versorgungs- und radiale Verteilungskanäle erfolgt.

Die DE-A-4 442 285 beschreibt eine aus Brennstoffzellen bestehende Batterie, bei der die Versorgung der Zellflächen auch über axiale Versorgungs- und radiale Verteilungskanäle erfolgt. Diese Konstruktion eignet sich jedoch hauptsächlich für Brennstoffzellen, die über direkte Luftkühlung gekühlt werden, weil weder Verteilungs- noch Versorgungskanäle für Kühlmittel vorgesehen sind. Batterien aus Brennstoffzellen müssen bei zunehmender Leistungsstärke pro Fläche der Batterie stärker gekühlt werden. In vielen Fällen reicht wegen ihrer begrenzten Wärmeübertragung eine reine Luftkühlung nicht aus. Eine Flüssigkeitskühlung wäre deshalb erforderlich, sie ist aber bei Brennstoffzellen dieser Art nur durch Ersatz des Kühlmediums Luft durch Flüssigkeit, die in einem äußeren Gefäß geführt wird, das die gesamte Batterie umschließt, möglich. Problematisch ist dabei einerseits, daß die Flüssigkeit in direkten Kontakt mit dem Elektrolyten kommen kann (was zu Kriechströmen und zu Korrosionen führt) und andererseits, daß der Behälter platzraubend ist. Eine praktikable Flüssigkeitskühlung gibt es also für diese Konstruktion einer Batterie noch nicht.

DE 42 34 093 offenbart zwar die korrosionsfreie Kühlung von Zellflächen einer Brennstoffzelle mit Flüssigkeit, aber keine Konstruktion, die eine gleichmäßige Anströmung der zu kühlenden und der aktiven Flächen gewährleistet. Vielmehr resultiert bei diesem Stand der Technik über einen punktförmigen Einlaß eine diagonale Strömung der Medien über die Zellflächen, die eine Unterversorgung der weder zu einer Einlaßnoch zu einer Auslaßöffnung benachbarten Randgebiete der Zellfläche nach sich zieht. Dadurch wird die Leistung der Brennstoffzelle gegenüber einer gleichmäßigen Versorgung der Flächen reduziert. Darüber hinaus erfordern die dort offenbarten Bauelemente hohe Fertigungskosten, weil die einzelnen Versorgungs- und Verteilungskanäle mittels einer oder mehrerer Verbindungslinien gasdicht abgeschlossen werden müssen. Sowohl die hohen Fertigungskosten als auch die teilweise Unterversorgung der Zellfläche wirken sich nachteilig auf die Attraktivität der Brennstoffzelle als einer der Energiewandler der Zukunft aus.

Aufgabe der vorliegenden Erfindung ist es daher, eine großserientaugliche, kompakte Brennstoffzelle mit Flüssigkeitskühlung bereitzustellen, deren einfache Konstruktion eine gleichmäßige Anströmung der Zellflächen ermöglicht, ohne die Zelldicke zu vergrößern.

Allgemeine Erkenntnis der Erfindung ist, daß Verteilungskanäle im Randbereich der Zellflächen durch Stapelung und Staffelung so anbringbar sind, daß
- eine gleichmäßige Anströmung der Zellflächen mit mehreren (im Regelfall drei) Medien erfolgt,
- wobei die Anströmgeschwindigkeit der Medien verringert wird,
- gleichzeitig eine Erniedrigung der Fertigungskosten durch Einsparung mehrerer Verbindungslinien, die nach dem Stand der Technik Schweißnähte sind, und
- eine Verkleinerung der Zelldicke (Platzbedarf der Brennstoffzelle axial zu der Zellfläche) bei flüssigkeitsgekühlten Batterien durch mögliche Einsparung zweier Zwischenelemente zwischen den einzelnen Zellen eines Brennstoffzellenblocks sowie durch Elimination des axialen Platzbedarfs der Flüssigkeitskühlung resultiert.

Gegenstand der Erfindung ist eine Brennstoffzelle Brennstoffzelle mit Flüssigkeitskühlung, die eine Kathode, einen Elektrolyten und eine Anode umfaßt, wobei zumindest ein Verteilungskanal zur Versorgung der Zellfläche mit Kühlmittel vorgesehen ist, der in der Zellfläche so angebracht ist, daß die Versorgung der Zellfläche längs der Kanten durch eine geöffnete Länge des Verteilungskanals von mindestens 50% erfolgt und die Zelldicke der Brennstoffzelle mit Kühlmittelverteilung nicht höher ist als die einer analogen Konstruktion ohne Kühlung.

Weitere vorteilhafte Ausgestaltungen der Erfindung ergeben sich aus den Unteransprüchen 2 bis 6 sowie den Figuren und der Beschreibung.

Eine Brennstoffzelle und/oder ein Brennstoffzellenstapel nach der Erfindung kann selbstatmend betrieben werden, das heißt mit nur einem axialen Versorgungskanal zur Versorgung der Anode mit Brennstoff und einem weiteren zur Versorgung der Kühlflächen, aber ohne Versorgungskanal zur Kathode hin. Entsprechendes gilt für die Entsorgungskanäle.

Eine Ausführungsform der Erfindung enthält die Verteilungskanäle in radialer (senkrechter) Stellung zu den axialen Versorgungskanälen, jedoch ist die Erfindung nicht auf diese geometrische Anordnung der Kanäle beschränkt, sondern sie läßt sich vielmehr bei einer Vielzahl von einfacheren und komplizierteren Stellungen der Versorgungs- und Verteilungskanäle zueinander realisieren. Dabei kann eine gebogene Anschlußstelle des Verteilungskanals an dem Versorgungskanal oder auch eine Anbringung des Verteilungskanals am axialen Kanal in einem Winkel, der verschieden von 90° ist, in Betracht kommen.

Nach einer weiteren Ausgestaltung der Erfindung sind die Versorgungs- und Verteilungskanäle rohrförmig ausgebildet, jedoch können die Kanäle auch jede andere Form, die sich zum Transport des Mediums in einer Brennstoffzelle eignet, annehmen. So kann es die Konstruktion der Brennstoffzelle erfordern, daß die Kanäle ganz oder teilweise eckig sind. Insbesondere können auch die Innenseiten der Kanäle verschiedene Oberflächenstrukturen haben, die die Strömung des Mediums in oder aus den Kanälen verschieden beeinflussen. Dabei kann die Oberflächenstruktur der Kanalinnenseite aus den Materialien der den Kanal bildenden Bauteile geformt sein Die Innenseite kann auch ein- oder mehrstückig ausgebildet sein (beispielsweise mit Beschichtungen oder Erhebungen, die das Strömungsverhalten des Mediums beeinflussen), wobei die Materialien beliebig wählbar sind.

Bei besonders platzsparenden Ausführungsformen kann vorteilhafterweise auch eine Konstruktion vorgesehen sein, bei der ein Versorgungskanal im Bereich der Zellfläche, beispielsweise mittig, untergebracht ist.

Grundsätzlich kann die Brennstoffzelle jede beliebige Form haben. Eine besonders bevorzugte Ausführungsform ist jedoch die planare rautenförmige und im besonderen die rechteckig ausgestaltete Brennstoffzelle. Die Zellflächen derartiger Brennstoffzellen wiesen bisher immer unterversorgte Bereiche auf, weil das Medium innerhalb der Zelle nur in zwei Strömungsrichtungen geführt wurde, nämlich einmal in der axialen zu den Zellflächen hin und dann in der diagonalen über punktförmige Einlaß- und Auslaßöffnungen über die Zellfläche hinweg. Bei der diagonalen Strömung über die Zellfläche hinweg mußten bislang immer unterversorgte Bereiche entlang der anderen diagonalen Achse über die Zellfläche in Kauf genommen werden.

Erfindungsgemäß ist es nun bei einer planaren rautenförmigen Brennstoffzelle vorteilhaft, daß die Verteilungskanäle entlang der Kantenseiten so vorgesehen sind, daß die Länge der Verteilungskanäle zumindest 50 Prozent der jeweiligen Kantenseitenlänge einnehmen. Besonders bevorzugt betragen dabei die Längen der Verteilungskanäle zwischen 80 und 100 Prozent der Kantenseitenlänge, wobei der Bereich der Zellfläche größer wird, der sowohl an einen zubringenden Verteilungskanal (der an die Einlaßöffnung des Versorgungskanals gekoppelt ist), als auch an einen wegbringenden Verteilungskanal (der an die Auslaßöffnung des Versorgungskanals gekoppelt ist) angeschlossen ist.

Unter Flüssigkeitskühlung wird, neben den Kühlungen, die herkömmlicherweise unter diesen Begriff fallen, auch eine sog. heat pipe-Kühlung verstanden.

Erfindungsgemäß bleibt die Zelldicke einer Brennstoffzelle trotz zusätzlicher Flüssigkeitskühlung konstant. Dies wird erfindungsgemäß dadurch erreicht, daß das Kühlmedium nicht in einem extra dafür geschaffenen Raum geführt wird, sondern einfach zwischen den einzelnen Brennstoffzellen eines Stapels. Diese Ausführungsform wird in den Figuren näher erläutert.

Die Verteilungskanäle können gestaffelt und/oder gestapelt zueinander angeordnet sein, wobei die Ausführungsform, in der die Verteilungskanäle nur gestapelt angeordnet sind, eine einfachere Randkonstruktion haben, die aber mit dem Nachteil einer höheren Zelldicke verbunden ist. Die platzsparende Ausführungsform hat eine kombinierte gestaffelte und gestapelte Anordnung der Verteilungskanäle.

Erfindungsgemäß werden als Brennstoffzellen sowohl Niederwie auch Mittel- und Hochtemperatur-Brennstoffzellen bezeichnet. Beispielhaft seien einige Vertreter genannt: die Protonenleitende Polymerelektrolytmembran-Zelle (PEMFC), die Phosphorsäurezelle (PAFC), und die alkalische Brennstoffzelle (AFC). In den letztgenannten kann das Kühlmedium mit dem Elektrolyten identisch sein.

Unter "Kante" wird die äußere Begrenzungslinie der aktiven Fläche verstanden.

"Kantenseite" ist die Zellkante in dem Spezialfall, daß die Zellfläche Ecken besitzt, wobei der Begriff Ecke nicht auf spitze Ecken beschränkt ist, sondern auch abgerundete Ecken mitumfaßt.

Als "aktive Fläche" oder "aktive Zellfläche" werden in der Brennstoffzelle oder in der aus Brennstoffzellen aufgebauten Batterie all die Flächen bezeichnet, an denen Ionen durch den Elektrolyten wandern.

Als "Zellfläche" werden alle Flächen der Brennstoffzelle oder des Brennstoffzellenstapels bezeichnet, die in der Draufsicht auf die Zelle erkennbar sind. Die Zellfläche kann demgemäß aus den verschiedensten Materialien bestehen, je nach ihrer Funktion. Als Materialien für Zellflächen, an denen der Stromabgriff über den aktiven Flächen stattfindet, und die zur Begrenzung der Reaktionsräume dienen (d.h. für die sogenannten Separatoren), seien beispielsweise Graphit, Titan und/oder Metallegierungen genannt. Zur Vergleichmäßigung des Stromabgriffs werden Gewebe, Netze oder Papiere aus Materialien verwendet, die ähnlich denen der Separatoren sind. Rahmenbereiche sind beispielsweise aus Kunststoff gebildet.

Die aktive Fläche kann eine beliebige Form haben wobei sie weder die Form der Brennstoffzelle noch gegebenenfalls die äußere Form ihres Rahmens annehmen muß. Die Verteilung der Medien im Inneren der Zellen auf den aktiven Flächen und den Zellflächen kann durch in die Separatoren eingeprägte Kanäle, beispielsweise Rinnen, erfolgen. Ebensogut kann sie jedoch auch durch andere Maßnahmen bewirkt werden wie beispielsweise eingelegte Hindernisse, Noppen, Netze und Siebe. Die Materialien der jeweiligen Hindernisse sind jeweils den geforderten Funktionen angepaßt. Die in die Separatoren eingeprägten Kanäle können, wie gesagt, Rillen und Nuten sein, die ihrerseits wiederum geradlinig, kurvig oder gekrümmt verlaufen können.

Die Randbereiche der Zellflächen können, wie gesagt, aus demselben Material wie die aktive Fläche selbst sein, sie können jedoch auch aus verschiedenem und nicht einheitlichem Material sein. Sie können planar, lediglich mit den Verteilungskanälen versehen sein, oder sie können auch selbst über eine kompliziertere Oberflächenstruktur oder Form verfügen. Innerhalb eines Brennstoffzellenstapels müssen die Zellen und damit auch die Zellflächen nicht alle gleich aufgebaut sein, sondern jede Zelle kann individuell gestaltet sein, je nachdem, wie es praktikabel erscheint. Die Medien können in beliebiger Weise zueinander geführt werden beispielsweise im Gegen-, Parallel- oder Kreuzstrom.

Als "Medium" werden im Sinne der vorliegenden Erfindung zunächst alle Gase und Flüssigkeiten bezeichnet, die in Brennstoffzellen als Oxidans wirken können. Beispielhaft seien genannt Luft, Sauerstoff und beliebige Mischungen aus diesen Komponenten. Darüber hinaus wird als Medium jede Art von Brennstoff bezeichnet, wie beispielsweise Wasserstoff, Methanol, Synthese- und/oder Reformergas sowie Erdgas. Desweiteren wird als Medium jedes einsetzbare Kühlmedium, wie beispielsweise Wasser und Luft, wobei unter Kühlmedium im Falle der PAFC und AFC auch der Elektrolyt gemeint sein kann, bezeichnet.

Der Betrieb der Brennstoffzelle kann, wie bereits erwähnt, selbstatmend, durch aufgeprägte Luftströmung zwangsdurchströmt sowie druckbehaftet durchgeführt werden. Darüber hinaus ist jeder andere mögliche Betrieb der Brennstoffzelle oder der Batterie unter Einsatz der erfindungsgemäßen Konstruktion denkbar.

In diesem Zusammenhang wird auf die Veröffentlichung des Miterfinders Dr. Nölscher in "Klimaverträgliche Energienutzung und Energiememorandum 1995 der DPG zum Klimagipfel" Tagungæband des AKE auf der Frühjahrstagung der DPG, (3/95) hingewiesen, auf den vollinhaltlich bezug genommen wird und dessen Offenbarungsgehalt Gegenstand der vorliegenden Beschreibung ist.

Als "Verbindungslinie" werden alle Schweiß-, Klebe-, Löt- und sonstige Nähte verstanden, mit deren Hilfe innerhalb eines Brennstoffzellenstapels und/oder innerhalb einer Brennstoffzelle verschiedene Räume dicht gegeneinander abgeschlossen werden können.

Als Berührungslinie wird die Linie einer beispielsweise wellblechartigen Zellfläche verstanden, die die darunter oder darüber liegendeZellfläche berührt. Eine Berührunglinie begrenzt einerseits eine Rinne oder Nut auf einer Zellfläche, schließt diese im Regelfall jedoch nicht dicht ab.

Unter ,,Versorgungskanal" wird erfindungsgemäß jeder Kanal verstanden, der ein Medium zu einer Zellfläche hin- oder abtransportiert. Unter ,,Verteilungskanal" werden Kanäle verstanden, in denen das unverbrauchte Medium zur Umsetzung auf der Zellfläche hinströmt und auch solche Kanäle, in denen sich das Medium nach erfolgter Umsetzung sammelt. Es wird also im folgenden weder zwischen Versorgungs- und Entsorgungskanal noch zwischen Verteilungs- und Sammelkanal unterschieden.

Je nach Anforderungen kann die Brennstoffzelle über verschiedene Abdichtungskonstruktionen an den Randbereichen verfügen. Es können also sowohl Randabdichtungen nach der Filterpressentechnik im Rahmen der vorliegenden Erfindung verwendet werden, sowie auch Abdichtungen mit Rahmenelementen. Bei der Verwendung von Rahmenelementen können Abstandshalter mit zusätzlicher Dichtung zu den einzelnen Brennstoffzellen, beispielsweise einer Batterie, vorgesehen sein.

Bei vielen Arten der Abdichtung ist es dabei möglich, die axiale Medienführung im äußeren Dichtrahmen vorzusehen. Die axiale Medienführung kann mittels eines Versorgungskanals, der zur Versorgung einer Zellfläche über mindestens eine Einlaß- oder Auslaßöffnung verfügt, vorgesehen sein. Über einen eigenen Versorgungskanal wird das jeweilige Medium vor seiner Umsetzung zur Zellfläche hin- und nach seiner Umsetzung von der Zellfläche wegtransportiert. Erfindungsgemäß mündet zumindest eine der Einlaß- oder Auslaßöffnungen des Versorgungskanals, auf der Höhe einer Zellfläche, in einen Verteilungskanal, der seinerseits entlang seiner geöffneten Seite über verschiedene Öffnungen, möglicherweise als eine große geöffnete Seite oder auch in Form vieler Einzelöffnungen ausgebildet, zur Zellfläche hin verfügt. Als "geöffnete Länge" des Verteilungskanals wird die Länge der geöffneten Seite des Verteilungkanals bezeichnet, die zur Zellfläche hin offen ist.

Im Regelfall werden die drei Strömungsrichtungen, die das Medium in den beiden Kanälen und auf der Zellfläche einnimmt, jeweils ungefähr quer zueinander stehen, so daß in einem Spezialfall der erfindungsgemäßen Brennstoffzelle die drei Strömungsrichtungen des Mediums (zuerst im Versorgungs- dann im Verteilungskanal und schließlich auf der Zellfläche) einen dreidimensionalen Raum aufspannen.

Mehrere Verteilungskanäle können innerhalb einer Brennstoffzelle gestapelt und/oder gestaffelt angeordnet werden. Die Brennstoffzelle selbst kann jede beliebige, auch komplizierte Form annehmen, je nachdem wofür die Brennstoffzelle vorgesehen ist, bevorzugt auch die Möglichkeit, daß die Brennstoffzelle eine planar rautenförmige oder rechteckige Form annimmt. Bei dieser Möglichkeit der erfindungsgemäßen Brennstoffzelle wird zumindest eine Zellfläche über Kantenseiten verfügen. Diese Kantenseiten sind im Randbereich der Zellfläche, die, wie bereits erwähnt, im Material und in der Oberflächengestaltung von der Zellfläche selbst verschieden sein kann, ausgebildet. "Stapelung" bedeutet dabei, daß die Verteilungskanäle hintereinander, also axial zu den Zellflächen, angeordnet werden, wohingegen die "Staffelung" eine versetzte Anordnung der Verteilungskanäle parallel und auf einer Höhe mit der Zellfläche bedeutet. Durch das erfindungsgemäße System der gestaffelten und gestapelten Anordnung von Verteilungskanälen tritt bei Brennstoffzellen mit Flüssigkeitskühlung eine Erniedrigung der Zelldicke gegenüber der rein gestapelten Anordnung ein. Die Verminderung der Zelldicke ist insbesondere bei der mobilen Anwendung der Brennstoffzelle von besonderem Vorteil.

Alle in der Beschreibung enthaltenen Definitionen gelten auch für die Ansprüche, die Zusammenfassung und die Erläuterung zu den Figuren.

Weitere vorteilhafte Ausgestaltungen der Erfindung sind in den Unteransprüchen beschrieben und werden anhand der nachfolgenden Figuren erläutert.

Dabei zeigen:
- Figur 1: eine Draufsicht auf eine Zellfläche in einem Brennstoffzellenblock entsprechend dem Stand der Technik (OS-DE 42 34 093 A1);
- Figur 2: einen Teilquerschnitt axial zu einer Zellfläche durch einen Brennstoffzellenblock entsprechend demselben Stand der Technik;
- Figur 3: eine Aufsicht auf eine erfindungsgemäße Brennstoffzelle;
- Figur 4: einen Teilquerschnitt (entlang der Linie I - I in Fig.3) durch einen Block aus erfindungsgemäßen Brennstoffzellen (wobei die Linie I - I entlang einer Berührungslinie der Separatoren 21 verläuft);
- Figur 5: einen weiteren Teilquerschnitt (entlang der Linie II - II aus Fig. 3, die entlang einer Berührungslinie eines Separators 21 mit einer Elektrode 17/19 verläuft);
- Figur 6: einen dritten Teilquerschnitt (entlang der Linie III - III in Fig. 3); und
- Figur 7: einen letzten Teilquerschnitt (entlang der Linie IV - IV in Fig. 3) durch einen Zellenblock aus erfindungsgemäßen Brennstoffzellen.

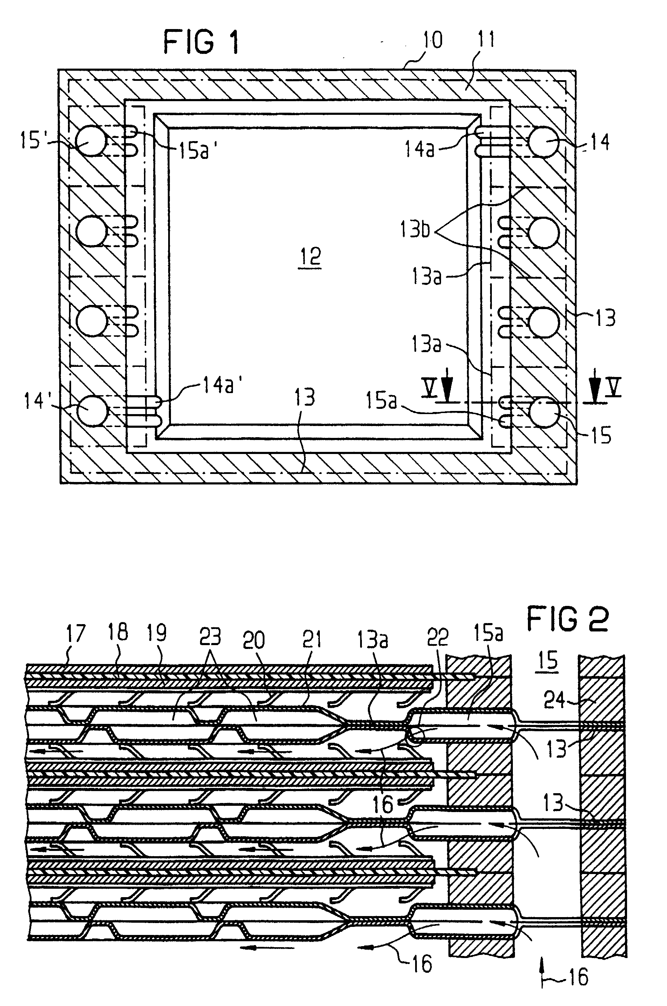

Der Querschnitt der Figur 1 zeigt eine Aufsicht auf eine Brennstoffzellenbatterie nach dem Stand der Technik und zeigt eine Zellfläche die von der Linie 10 eingeschlossen wird, in der ein Randbereich 11 schraffiert zu erkennen ist. Die aktive Fläche 12, an der die Umsetzung erfolgt, befindet sich in der Mitte, ganzseitig vom Randbereich 11, umgeben. Im Randbereich 11 befinden sich Verbindungslinien 13, die strichpunktiert eingezeichnet sind. Entsprechend dem Stand der Technik sind zusätzlich zu der, den ganzen Randbereich umlaufenden Verbindungslinie 13, jeweils zwei weitere Verbindungslinien 13a erforderlich, die entlang den beiden sich gegenüberliegenden Kantenseiten verlaufen, an denen sich die Versorgungskanäle befinden. Zusätzlich zu diesen Verbindungslinien 13a sind jeweils noch weitere Verbindungslinien 13b auf den beiden Kantenseiten der Zellfläche notwendig, um die Versorgungskanäle voneinander gasdicht abzutrennen.

Gemäß Figur 1 strömt das Kühlmedium, beispielsweise Wasser, durch den Versorgungskanal 14 und die beiden Verteilungskanäle 14a auf die beiden Flächen zwischen dem Kathoden- und dem Anodenraum, die gekühlt werden müssen. Der Einlauf findet über zwei Verteilungskanäle 14a statt, von deren punktförmiger Einlaßöffnung aus sich das Kühlmedium auf die gesamte Fläche verteilen könnte, jedoch hauptsächlich in diagonaler Richtung zu den Verteilungskanälen 14a' hin strömt. Über die Verteilungskanäle 14a' und den Versorgungskanal 14' wird das gebrauchte (erwärmte) Kühlmedium von der Zellfläche wieder wegtransportiert. Aufgrund dieser diagonalen Strömung des Kühlmediums entlang der Zellfläche kann davon ausgegangen werden, daß eine Unterversorgung der Bereiche die den Versorgungskanälen 15 und 15' benachbart sind, stattfindet. Diese bereichsweise Unterversorgung der Zellfläche der Brennstoffzelle bewirkt nicht nur ein Temperaturgefälle innerhalb der Zellfläche, das die Homogenität der Leistung beeinträchtigt, sondern es setzt auch die maximale Leistung der Brennstoffzelle herab, weil die maximale Betriebstemperatur der Brennstoffzelle sich nach den Bereichen, die nicht optimal gekühlt werden können, richtet.

Eine entgegengesetzt diagonale Verteilung auf der Zellfläche erfährt das Medium, das durch den Versorgungskanal 15 auf seine aktive Fläche gelangt. Dabei handelt es sich um eines der reaktiven Medien wie zum Beispiel Brennstoff oder Oxidans. In beiden Fällen resultiert wieder eine Unterversorgung der nicht mit einbezogenen diagonalen Eckbereiche der Zellfläche, wodurch eine Leistungsverminderung der Vorrichtung aufgrund der ungenutzten aktiven Fläche resultiert. Es erübrigt sich, genauer auszuführen, daß die Unterversorgung auf Bereichen der Zellfläche für die Effizienz der Brennstoffzelle nachteilig ist.

Figur 2 zeigt einen Querschnitt entlang der Achse V-V der Figur 1. Ganz rechts ist der äußerste Rand des Brennstoffzellenblocks mit den Dichtbereichen 24 zu sehen. Die Dichtbereiche 24 der jeweiligen einzelnen Brennstoffzellen sind an der Verbindungslinie 13 gasdicht miteinander verbunden. Links daneben ist ein Querschnitt durch den axialen Versorgungskanal 15 zu sehen, in dem der Brennstoff 16 von unten nach oben strömt. Die ganze Abbildung der Figur 2 umfaßt drei Brennstoffzellen, die an den jeweils sich wiederholenden Einheiten der Anode 17, dem Elektrolyten 18 und der Kathode 19 zu erkennen sind. Oben und unten anschließend an eine jeweilige Brennstoffzelle findet sich der elektrizitäts- und wärmeleitende Separator 21 und die benachbarte Elektrode, die jeweils den Kathoden- oder Anodenraum begrenzt. Der abschließende Separator 21 einer jeden Brennstoffzelle im Stapel ist mit der abschließenden Separator 21 der darauffolgenden Brennstoffzelle im Stapel so verbunden, daß ein Kühlmedium entlang der Separatoren strömen kann. In der vorliegenden Figur 2 strömt das Medium 16 durch den axialen Versorgungskanal 15 in die radialen Verteilungskanäle 15a. Aus den Verteilungskanälen strömt das Medium durch die Bohrungen 22 punktförmig in den Anodenraum und direkt auf die Anode, wobei der Anodenraum durch den Separator 21 und die Anode mit dem Element 20 definiert wird. Gegenüber dem Raum 23, der sich zwischen zwei aufeinanderliegenden Separatoren 21 zweier Brennstoffzellen des Brennstoffzellenblocks befindet, ist der Versorgungsweg des Mediums 16 durch die Verbindungslinie 13a gasdicht abgeschlossen. Die Entsorgung des Mediums 16 nachdem es über die aktive Fläche entlang des Separators 21 und der Anode des Brennstoffzellenblocks geströmt ist, verläuft umgekehrt nach demselben Schema.

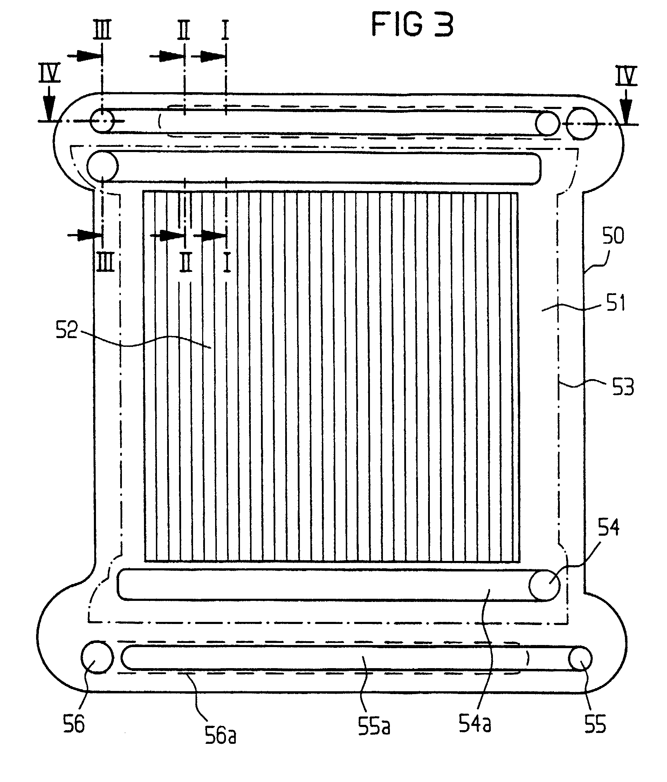

Figur 3 zeigt eine Aufsicht auf eine Zellfläche 50 einer erfindungsgemäßen Brennstoffzelle, wobei wiederum der Randbereich 51 und die aktive Fläche 52, an der die Umsetzung erfolgt, zu erkennen ist. Im Randbereich befindet sich die Verbindungslinie 53, die der Verbindungslinie 13 des gezeigten Standes der Technik (Fig.1) entspricht, wobei erfindungsgemäß auf die Verbindungslinien, die den Verbindungslinien 13a und 13b entsprechen, verzichtet werden kann. An den Ecken sind die axialen Versorgungskanäle 54, 55 und 56 zu erkennen. Entlang dieser axialen Kanäle werden die Medien zur Zellfläche hin und von der Zellfläche weg transportiert. Die Verteilungskanäle 54a, 55a und 56a sind gestaffelt und gestapelt angeordnet, wobei 54a gestaffelt, also in der Draufsicht oberhalb des Verteilungskanals 55a zu sehen ist, und 56a, der durch die gestrichelte Linie markiert wird, gestapelt zu 55a angeordnet ist und deshalb in dieser Ansicht unter ihm liegt. Der Verteilungskanal 54a ist vom Verteilungskanal 55a durch die Verbindungslinie 53 getrennt. Dank der Verteilungskanäle, die die ganze Kantenseitenlänge entlang verlaufen, können die Medien gleichmäßig die gesamte aktive Fläche 52 anströmen. Der punktförmige Einlaß nach dem Stand der Technik wird dabei zugunsten des vorteilhafteren Einlasses entlang einer Kantenseite ersetzt. Deshalb gibt es keine unterversorgten Bereiche mehr wie es bei der Diagonalströmung der Fall war, und die Einströmgeschwindigkeit des Mediums auf die aktive Fläche ist reduziert.

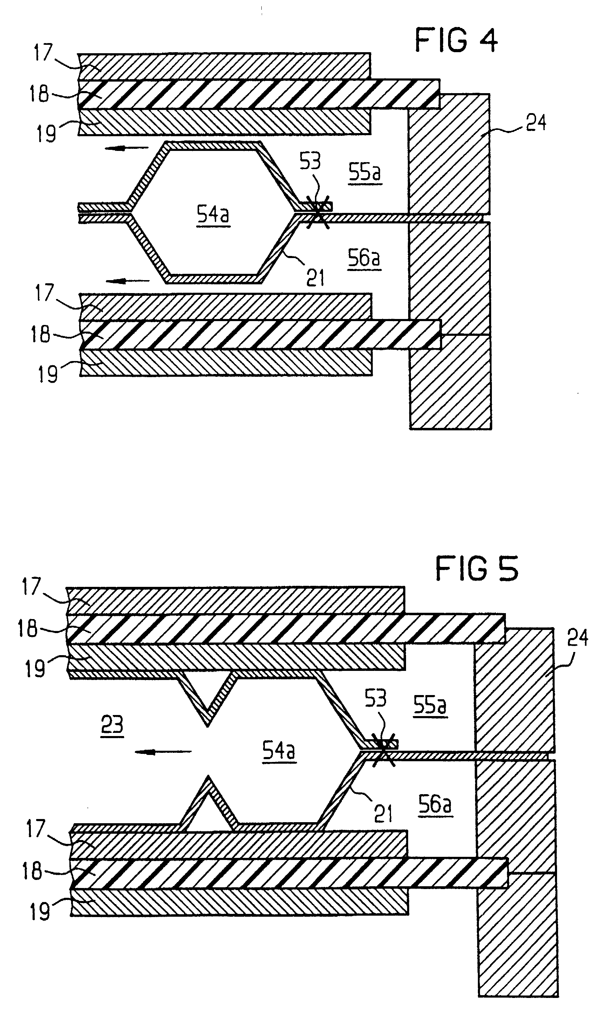

Figur 4 zeigt einen Teilquerschnitt durch einen Brennstoffzellenstapel, der aus erfindungsgemäßen Brennstoffzellen aufgebaut ist. Der Teilquerschnitt geht entlang der Linie I - I der Fig.3, die über der aktiven Fläche entlang einer Berührungslinie der Separatoren 21 zweier aufeinender liegender Brennstoffzellen verläuft. Figur 4 zeigt den Schnitt durch Fig. 3 für eine Ausführung der aktiven Fläche 52 mit Rillen. Die Berührungslinien ergeben sich dabei, bei der Ausgestaltung der Zellfläche mit Rillen, wenn die maximale Erhebung des einen Separators mit der maximalen Vertiefung des darauffolgenden Separators aufeinanderliegt. Rechts von der Verbindungslinie (Klebe- oder Schweißnaht) wird ein Separator nach außen geführt, um Anoden- und Kathodenräume zu trennen.

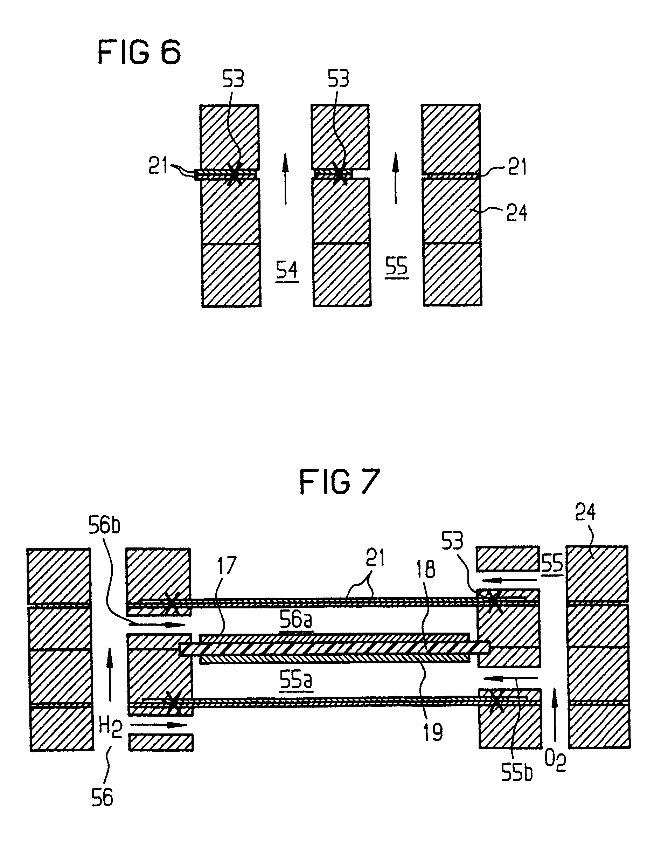

Rechts außen ist wiederum der Randbereich des Brennstoffzellenstapels mit den Dichtungen 24 und der Verbindungslinie 53, die den Raum zwischen zwei aufeinandergestapelten und in Serie geschalteten Brennstoffzellen dicht abschließt, zu sehen. Oben und unten ist jeweils die Dreiereinheit der Brennstoffzelle, nämlich die Anode 17, der Elektrolyt 18 und die Kathode 19 zu erkennen. Das Element 20 kann, wie in Fig. 4 gezeichnet, entfallen (kann aber auch z.B. zur Verbesserung der Kontaktierung, beibehalten werden). Der Separator 21 befindet sich, nicht wie beim Stand der Technik, in einem gewissen Abstand zur Elektrode, sondern befindet sich gleich im Anschluß zu ihr wodurch sie zusammen mit der Elektrode selbst den Anoden- oder Kathodenraum definiert. Zwischen zwei in einem Stapel aufeinanderliegenden Brennstoffzellen berühren sich die Separatoren 21 entlang der Berührungslinie derart, daß sie Hohlräume, insbesondere Kanäle oder Rillen 23 (Fig. 5), zur Aufnahme des Kühlmediums definieren, wobei die Hohlräume auch den Kühlmittelverteilungskanal 54a mitumfassen und durch die Verbindungslinien 53a dicht abgeschlossen sind. Bei dem hier gezeigten Betrieb der Brennstoffzelle im Parallelstrom strömen die drei Medien Oxdians O₂, Brennstoff H₂ und Kühlmittel H₂O in derselben Richtung von rechts nach links. Aufgrund der gestaffelten Anordnung liegen die Oxidans- und Brennstoffverteilungskanal 55a und 56a rechts vom Kühlmittelverteilungskanal 54a. Die Fläche, auf der das Kühlmittel den Wärmeaustausch zwischen dem Kathoden- oder Anodenraum und dem Raum, in dem sich das Kühlmittel befindet, durchführt, kann, wie im dargestellten Fall, gerade ausgestaltet sein, kann aber auch jede andere beliebige Oberflächenstruktur, insbesondere auch eine mit Noppen oder mit Rillenstruktur, die ihrerseits wieder gerade oder gekrümmt ausgestaltet sein kann, einnehmen. Die Noppen können ggf aus elektrisch leitendem Material (zur Ableitung des erzeugten Stroms) und hohl, oder aber auch massiv sein. Die Reaktanden O₂ und H₂ strömen dann um diese Noppen herum. Die mittlere Strömungsrichtung ist jedoch im Regelfall quer oder sogar ca. senkrecht zu den Versorgungskanälen. Die Ausformungen der Bleche oder Platten der Separatoren 21 dienen zur Strömungsoptimierung aller drei Medien, sowohl im Randbereich 51 als auch über der aktiven Fläche 52. Zusätzlich können andere Bauteile (aus Metall, Kunststoff oder anderem Material) verwendet werden.

Figur 5 zeigt einen Teilquerschnitt durch einen erfindungsgemäßen Brennstoffzellenstapel entlang der Linie II - II (die entlang einer Berührungslinie der Separatoren 21 mit der Anode 17 und nach oben hin mit der Kathode 19 verläuft) in Figur 3. Ganz rechts sind wieder die Dichtungen 24 des Brennstoffzellenstapels zu erkennen sowie die Dreiereinheit, die Anode 17, der Elektrolyt 18 und die Kathode 19. Die Separatoren 21 sind mit einer Verbindungslinie 53 verbunden und definieren den Raum 23, in dem das Kühlmittel die Fläche anströmt. Die Verteilungskanäle 56a und 55a werden jeweils auf einer Seite von einem Separator 21 und an der anderen Seite von den Elektroden 17 und 19 begrenzt. Die Separatoren 21 weisen Bereiche auf, in denen sie die Elektroden kontaktieren. Der Verteilungskanal 54a wird ebenso wie der Raum 23 an zwei Seiten von Sparatoren 21 begrenzt.

Figur 6 zeigt einen Teilquerschnitt entlang der Linie III - III in Figur 3. Ganz rechts zu sehen sind wiederum die Dichtungen 24 und ein Separator 21, der zur Trennung der Reaktandenräume in den sich anschließenden Verteilerkanälen unentbehrlich ist. Links im Anschluß an die erste Reihe Dichtungen befindet sich der Versorgungskanal 55, in dem das Oxidans axial von unten nach oben strömt. Links vom axialen Versorgungskanal 55 sind wiederum Dichtungen 24 zu erkennen, diesowie Separatoren 21 mit der Verbindungslinie 53, die die gestaffelt angeordneten Verteilungskanäle 55a und 54a, die am Schnitt III - III ihren Anfang haben, voneinander trennt. Links davon befindet sich der axiale Versorgungskanal 54, der wiederum durch eine Verbindungslinie 53 und Dichtungen 24 von der Umgebung abgeschlossen wird. Die zweite Verbindungslinie 53 ist wieder die äußere Begrenzungslinie der gesamten Brennstoffzelle (wie aus Figur 3 ersichtlich ist) und ist jedenfalls keine zusätzliche Verbindungslinie entsprechend den Verbindungslinien 13b in Figur 1.

Figur 7 schließlich zeigt einen Teilquerschnitt der Figur 3 entlang der Linie IV - IV. Wiederum von rechts nach links ist zunächst die Randabdichtung mit den Dichtungen 24 und dem Separator zu erkennen. Links davon befindet sich der axiale Versorgungskanal 55 mit der Auslaßöffnung 55b, die in den radialen Verteilungskanal 55a, der seiner ganzen Länge nach in diesem Teilquerschnitt sichtbar ist, mündet. Der Verteilungskanal 55a wird einerseits durch die Kathode 19 und andererseits durch die Separatoren 21 begrenzt. Im Anschluß an die Kathode 19 findet sich wieder der Elektrolyt 18 und die Anode 17, die ihrerseits wiederum einen Rand des Verteilungskanals 56a definiert. Der Verteilungskanal 56a ist weiter nach links gehend über die Einlaßöffnung 56b mit dem axialen Versorgungskanal 56 verbunden. Der Versorgungskanal 56 wiederum schließt an Dichtungen 24 linksseitig an. Im Vergleich zum Stand der Technik befinden sich bei der vorliegenden Ausführungsform die Ein- und Auslaßöffnungen des Mediums unmittelbar auf der Zellfläche auf der das Medium umgesetzt werden soll, also im vorliegenden Beispiel befindet sich die Einlaßöffnung 55b auf derselben Höhe wie die Kathode 19, so daß das Medium weder punktförmig einströmt noch direkt auf die Elektrode trifft. Erfindungsgemäß ist außerdem die Einströmungsgeschwindigkeit geringer. Nicht nur die Verbindungslinien 13a und 13b und das Element 20 des Standes der Technik wird also erfindungsgemäß eingespart, sondern auch der Strömungsverlauf der Medien wird vergleichmäßigt.

Brennstoffzellen nach der vorliegenden Erfindung können sowohl einzeln als auch im Stapel, in Serie geschaltet, als Batterie betrieben werden. Die Anwendung solcher Brennstoffzellen oder Batterien reicht vom Automobilantrieb bis zur Energieversorgung ganzer Häuser und Wohnanlagen. Die erfindungsgemäße Brennstoffzelle ist keineswegs auf die in den Figuren gezeigten Ausführungsformen beschränkt sondern kann auch alle anderen Ausgestaltungen, durch die das erfindungsgemäße Prinzip verwirklicht wird, annehmen.

## Patentansprüche

1. Brennstoffzelle mit Flüssigkeitskühlung, die eine Kathode, einen Elektrolyten und eine Anode umfaßt, wobei zumindest ein Verteilungskanal zur Versorgung der Zellfläche mit Kühlmittel vorgesehen ist, der in der Zellfläche so angebracht ist, daß die Versorgung der Zellfläche längs der Kanten durch eine geöffnete Länge des Verteilungskanals von mindestens 50% erfolgt und die Zelldicke der Brennstoffzelle mit Kühlmittelverteilung nicht höher ist als die einer analogen Konstruktion ohne Kühlung.

2. Brennstoffzelle nach Anspruch 1,
bei der zumindest zwei Verteilungskanäle gestaffelt angeordnet sind.

3. Brennstoffzelle nach einem der Ansprüche 1 oder 2,
bei der der Verteilungskanal für das Kühlmittel in senkrechter Richtung zwischen den Verteilungskanälen für Oxidans und Brennstoff angebracht ist, wobei dieser Verteilungskanal waagrecht zu mindestens einem der anderen Verteilungskanäle gestaffelt angeordnet ist und alle Verteilungskanäle parallel zueinander verlaufen.

4. Brennstoffzelle nach einem der vorstehenden Ansprüche,
bei der der Oxidanseinlaß ohne senkrechten Versorgungskanal, also selbsatmend oder durch ggf. druckbeaufschlagte Anströmung von außen, erfolgt.

5. Brennstoffzelle nach einem der vorstehenden Ansprüche,
bei der die Verbindungslinien, die innerhalb der Brennstoffzelle oder einem gebildeten Brennstoffzellenstapel Räume dicht gegeneinander abschließen, Klebelinien sind.

6. Brennstoffzelle nach einem der vorstehenden Ansprüche,
bei der zumindest ein Versorgungskanal im Bereich einer aktiven Fläche untergebracht ist.

## Revendications

1. Cellule électrochimique refroidie par liquide comprenant une cathode, un électrolyte et une anode, au moins un canal de distribution étant prévu pour alimenter en fluide de refroidissement la surface cellulaire, lequel canal est monté de telle façon dans la surface cellulaire que l'alimentation de la surface cellulaire s'effectue le long des bords à travers une longueur ouverte d'au moins 50% du canal de distribution et que l'épaisseur cellulaire de la cellule électrochimique avec distribution de fluide de refroidissement ne soit pas supérieure à celle d'une construction analogue sans refroidissement.

2. Cellule électrochimique selon la revendication 1, dans laquelle au moins deux canaux de distribution sont disposés de manière échelonnée.

3. Cellule électrochimique selon l'une des revendications 1 ou 2, dans laquelle le canal de distribution destiné au fluide de refroidissement est monté en sens vertical entre les canaux de distribution destinés à l'oxydant et au combustible, ce canal de distribution étant disposé horizontalement échelonné par rapport à au moins un des autres canaux de distribution et tous les canaux de distribution s'étendant parallèlement les uns aux autres.

4. Cellule électrochimique selon l'une des revendications précédentes, dans laquelle l'admission de l'oxydant s'effectue sans canal d'alimentation verticale, donc de manière autorespiratoire ou par soufflage, le cas échéant sous pression, de l'extérieur.

5. Cellule électrochimique selon l'une des revendications précédentes, dans laquelle les lignes de jonction rendant étanches l'un par rapport à l'autre des espaces à l'intérieur de la cellule électrochimique ou d'une pile de cellules électrochimiques, sont des lignes adhésives.

6. Cellule électrochimique selon l'une des revendications précédentes, dans laquelle au moins un canal de distribution est placé dans la zone d'une surface active.

## Claims

1. Fuel cell with liquid cooling, which comprises a cathode, an electrolyte and an anode, at least one distribution duct for supplying the cell surface with coolant being provided and being fitted in the cell surface in such a way that the cell surface is supplied along the edges through an open length of at least 50% of the distribution duct, and the cell thickness of the fuel cell with coolant distribution is not greater than that of an analogous design without cooling.

2. Fuel cell according to Claim 1, in which at least two distribution ducts are arranged in a staggered manner.

3. Fuel cell according to either of Claims 1 and 2, in which the distribution duct for the coolant is fitted in the perpendicular direction between the distribution ducts for oxidant and fuel, this distribution duct being arranged horizontally and staggered in relation to at least one of the other distribution ducts, and all the distribution ducts running parallel to one another.

4. Fuel cell according to one of the preceding claims, in which the oxidant inlet takes place without a perpendicular supply duct, that is to say by self-induction or as a result of optionally pressurized inflow from the outside.

5. Fuel cell according to one of the preceding claims, in which the connecting lines which tightly seal off from one another spaces within the fuel cell or a formed fuel-cell stack are adhesively bonded lines.

6. Fuel cell according to one of the preceding claims, in which the at least one supply duct is accommodated in the region of an active surface.
